# EUROPÄISCHE PATENTSCHRIFT

(11) **EP 3 456 466 B1**
(45) Veröffentlichungstag und Bekanntmachung des Hinweises auf die Patenterteilung: **06.04.2022**
(21) Anmeldenummer: 17190992.2
(22) Anmeldetag: 14.09.2017
(51) Int. Cl.: B23Q 3/157, B23Q 3/155

(54) **WERKZEUGMAGAZIN UND VERFAHREN ZUM WECHSELN VON WERKZEUGEN**
TOOL MAGAZINE AND METHOD FOR CHANGING TOOLS
MAGASIN À OUTILS ET PROCÉDÉ DE CHANGEMENT D'OUTILS

(43) Veröffentlichungstag der Anmeldung: 20.03.2019
(73) Patentinhaber: Rollomatic S.A., 2525 Le Landeron (CH)
(72) Erfinder: Picon, Fabien, 2520 La Neuveville (CH); Bürli, Frédéric, 1110 Morges (CH)
(74) Vertreter: Geitz Truckenmüller Lucht Christ

(56) Entgegenhaltungen:
- EP-A1- 2 567 783
- DE-A1-102014 218 899

## Beschreibung

Die Erfindung geht aus von einem Werkzeugmagazin zur Aufnahme mehrerer Werkzeuge, welche zur Anordnung an einer Werkzeugspindel einer Werkzeugmaschine vorgesehen sind, und ein Verfahren zum Wechseln von Werkzeugen unter Verwendung des Werkzeugmagazins.

Werkzeugmaschinen mit Werkzeugspindel dienen der spanenden Bearbeitung von Werkstücken, beispielsweise zum Bohren, Fräsen, Schleifen, Drehen, Polieren und Gewindeschneiden. Bei der Bearbeitung von Werkstücken werden häufig unterschiedliche Werkzeuge benötigt. Diese Werkzeuge werden je nach Bearbeitung auf die Werkzeugspindel aufgesetzt. Diese für die Bearbeitung benötigten Werkzeuge werden in einem Werkzeugmagazin zur Verfügung gestellt. Dabei ist das Werkzeugmagazin mit einer Transfereinrichtung ausgestattet. Die Transfereinrichtung entnimmt ein bereits an der Werkzeugspindel angeordnetes erstes Werkzeug von der Werkzeugspindel, transportiert es zu dem Werkzeugmagazin und setzt es dort ab, entnimmt ein zweites Werkzeug von dem Werkzeugmagazin, transportiert es zu der Werkzeugspindel und ordnet es an der Werkzeugspindel an. Ein derartiges Werkzeugmagazin ist aus der EP 2567783 A1 bekannt. Die Druckschrift offenbart ein Werkzeugmagazin für eine Schleifmaschine. Das Werkzeugmagazin ist mit einem Magazinrad ausgestattet, das um eine zur Schleifspindelachse parallelen Werkzeugmagazinachse drehbar ist. Das Magazinrad weist mehrere Halter auf, welche jeweils ein Werkzeug aufnehmen. Eine Transfereinrichtung ist verschiebbar angeordnet. Die Transfereinrichtung wird in einer senkrecht zur Schleifspindelachse verlaufenden Transferrichtung zwischen der Schleifspindel und dem Magazinrad hin- und herbewegt. Sie entnimmt ein Werkzeug von der Schleifspindel und tauscht es gegen ein Werkzeug aus dem Werkzeugmagazin aus. Das Magazinrad wird gedreht um entweder einen freien Halter oder ein Werkzeug so zu positionieren, dass eine

Übergabe des Werkzeugs von der Transfereinrichtung auf das Magazinrad oder umgekehrt stattfinden kann. Die Anzahl der in dem Werkzeugmagazin zur Verfügung gestellten Werkzeuge ist durch das Magazinrad vorgegeben. Soll die Anzahl der zur Verfügung gestellten Werkzeuge vergrößert werden, muss der Radius des Magazinrades vergrößert werden. Das Werkzeugmagazin ist in der Regel unmittelbar benachbart zu der Werkzeugspindel auf derselben Maschinenbasis und in demselben Gehäuse angeordnet. Wird der Radius des Magazinrades vergrößert, so hat dies zur Folge, dass neben der Werkzeugspindel zusätzlich Platz zur Verfügung gestellt werden muss. Dieser Platz ist in dem vorgegebenen Gehäuse meist nicht vorhanden. Eine Vergrößerung des Radius des Magazinrades ist daher in der Regel mit einer Vergrößerung des Gehäuses verbunden. Da das Magazinrad mit seiner Werkzeugmagazinachse parallel zu der Schleifspindelachse angeordnet ist, bedeutet eine Vergrößerung der Anzahl der Werkzeuge in dem Werkzeugmagazin eine Vergrößerung des Gehäuses der Werkzeugmaschine in einer zur Werkzeugspindelachse senkrechten Ebene. Dies wiederum führt dazu, dass die Werkzeugmaschine beim Aufstellen an ihrem Einsatzort mehr Raum beansprucht.

Die DE 10 2014 218 899 A1 offenbart ein Speichersystem zur Aufnahme von Bearbeitungswerkzeugen. Das Speichersystem ist ausgestattet mit einem Werkzeugmagazin mit mehreren Aufnahmetellern und mit einer Greifeinrichtung, die entlang einer vertikalen Führung relativ zum Werkzeugmagazin bewegbar ist. Hierzu weist das Speichersystem einen entlang einer Führung verfahrbaren ersten Schlitten und einen entlang des ersten Schlittens verfahrbaren zweiten Schlitten auf, wobei der zweite Schlitten die Greifeinrichtung trägt. Zum Wechseln eines Werkzeugs wird ein Aufnahmeteller des Werkzeugmagazins derart gedreht, dass eine Aufnahme mit einem entsprechenden Werkzeug, das einer Bearbeitungsspindel zugeführt werden soll, in eine Übergabeposition verschwenkt wird. Der erste Schlitten wird entlang der vertikalen Führung derart bewegt, dass eine Greifeinrichtung in eine Ebene des entsprechenden Aufnahmetellers gelangt. Anschließend wird die Greifeinrichtung durch Bewegen des zweiten Schlittens in Richtung des aufzunehmenden Werkzeugs verfahren. Die Greifeinrichtung entnimmt das Werkzeug vom Aufnahmeteller. Durch eine anschließende Schwenkbewegung eines Drehmechanismus wird die Greifeinrichtung in Richtung der Bearbeitungsspindel gedreht. Durch eine Bewegung der Greifeinrichtung in vertikaler Richtung wird das Werkzeug der Bearbeitungsspindel übergeben. Damit können die Aufnahmeteller zwar eine größere Anzahl an Werkzeugen als bei der EP 2567783 A1 aufnehmen, jedoch wird dadurch die Bewegung der als Transferbewegung dienenden Greifeinrichtung komplexer und damit langsamer, was den Werkzeugwechsel verlangsamt.

Der Erfindung liegt die Aufgabe zugrunde, ein Werkzeugmagazin und ein Verfahren zum Wechseln von Werkzeugen eines Werkzeugmagazins zur Verfügung zu stellen, das mehr Werkzeuge als bekannte Werkzeugmagazine mit Magazinrad aufnehmen kann, ohne dabei mehr Platz in einer Ebene senkrecht zu der Achse des Magazinrades in Anspruch zu nehmen und ohne den Prozess des Werkzeugwechsels zu verlangsamen.

Diese Aufgabe wird durch ein Werkzeugmagazin mit den Merkmalen des Anspruchs 1 gelöst. Das Werkzeugmagazin zeichnet sich dadurch aus, dass es einen Magazin-Schlitten aufweist, der entlang einer Führungsschiene verschiebbar ist. An dem Magazin-Schlitten ist ein Rotationsantrieb angeordnet, welcher ein Drehmoment auf eine Magazin-Welle überträgt und die Magazin-Welle um eine Wellenrotationsachse dreht. An der Magazin-Welle sind mindestens zwei Magazinräder drehfest angeordnet. Dies bedeutet, dass bei einer Rotation der Magazin-Welle diese die Magazinräder mitnimmt. Die Magazinräder drehen damit alle gemeinsam mit der Magazin-Welle um die Wellenrotationsachse. Die Magazinräder sind nebeneinander an der Magazin-Welle angeordnet und weisen einen Abstand in axialer Richtung auf. Jedes der Magazinräder ist mit mehreren Werkzeughaltern ausgestattet. Jeder Werkzeughalter ist in der Lage, genau ein Werkzeug aufzunehmen. Befindet sich in einem Werkzeughalter kein Werkzeug, so wird der Werkzeughalter als freier Werkzeughalter bezeichnet. Das Werkzeugmagazin weist ferner eine an der Maschinenbasis verschiebbar angeordnete Transfereinrichtung auf. Diese ist entlang einer Transferachse in einer Transferrichtung und entgegen gesetzt dazu zwischen einer Werkzeugspindel und den Magazinrädern hin- und her verschiebbar. Dabei verläuft die Transferrichtung quer zur Führungsschiene. Die Transferachse und die Führungsschiene schneiden sich unter einem vorgegebenen Winkel. Die Transfereinrichtung nimmt ein an einem der Werkzeughalter angeordnetes Werkzeug auf, transportiert dieses in Transferrichtung von dem Werkzeughalter weg und zu der Werkzeugspindel hin. Dort setzt die Transfereinrichtung das Werkzeug ab. Soll das Werkzeug an der Werkzeugspindel ausgetauscht werden, nimmt die Transfereinrichtung das an der Werkzeugspindel angeordnete Werkzeug auf, transportiert es entgegen der Transferrichtung von der Werkzeugspindel weg und zu einem freien Werkzeughalter eines Magazinrades hin und setzt es an dem freien Werkzeughalter ab.

Um die Anzahl der Werkzeuge aufnehmenden Werkzeughalter in dem Werkzeugmagazin zu vergrößern, sind mehrere Werkzeugräder an der Magazin-Welle angeordnet. Die Einheit aus Magazin-Welle und Magazinrädern ist zusammen mit einem Rotionsantrieb auf einem Magazin-Schlitten angeordnet, der entlang einer Führungsschiene verschiebbar gelagert ist. Der Radius jedes der Magazinräder kann vergleichbar groß oder sogar kleiner sein als bei dem Magazinrad bekannter Werkzeugmagazine. Damit ist die Ausdehnung des Werkzeugmagazins in einer zur Wellenrotationsachse senkrechten Ebene genau so groß oder gegebenenfalls sogar kleiner wie bei einem bekannten Werkzeugmagazin mit einem Magazinrad. Das Werkzeugmagazin weist aufgrund des entlang der Führungsschiene verschiebbar gelagerten Magazin-Schlittens, der an dem Schlitten angeordneten Magazin-Welle und der an der Magazin-Welle angeordneten Magazinräder in Richtung der Wellenrotationsachse eine größere Ausdehnung auf als bekannte Werkzeugmagazine mit Magazinrad, jedoch ist diese Ausdehnung parallel zu der Achse der Werkzeugspindel oder unter einem Winkel gegen die Achse der Werkzeugspindel. In dieser Richtung weist die Werkzeugmaschine ohnehin eine große Ausdehnung auf. Solange das Werkzeugmagazin hinsichtlich seiner Ausdehnung in Richtung der zur Achse der Werkzeugspindel im wesentlichen parallelen oder unter einem Winkel verlaufenden Führungsschiene kleiner oder gleich groß ist, wie die Ausdehnung der Werkzeugmaschine in dieser Richtung, beansprucht eine Werkzeugmaschine mit dem erfindungsgemäßen Werkzeugmagazin nicht mehr Platz beim Aufstellen am Einsatzort als eine Werkzeugmaschine mit bekanntem Werkzeugmagazin. Mit dem erfindungsgemäßen Werkzeugmagazin werden somit mehr Werkzeughalter zur Aufnahme von Werkzeugen zur Verfügung gestellt, ohne dass eine mit dem Werkzeugmagazin ausgestattete Werkzeugmaschine mehr Platz beim Aufstellen am Einsatzort beansprucht.

Nach einer vorteilhaften Ausgestaltung der Erfindung weist die Transfereinrichtung mindestens zwei Endstellungen auf: eine Spindelposition und eine Werkzeugwechselposition. In der Spindelposition befindet sich die Transfereinrichtung in ihrer der Werkzeugspindel am nächsten gelegenen Position. In dieser Position nimmt die Transfereinrichtung ein an der Werkzeugspindel angeordnetes Werkzeug auf oder setzt ein Werkzeug an der Werkzeugspindel ab. In der Werkzeugwechselposition befindet sich die Transfereinrichtung in ihrer der Magazin-Welle am nächsten gelegenen Position. Insbesondere befindet sich in der Werkzeugwechselposition eine das Werkzeug aufnehmende Halteeinrichtung der Transfereinrichtung in ihrer der Magazin-Welle am nächsten gelegenen Position. In der Werkzeugwechselposition nimmt die Transfereinrichtung ein Werkzeug auf, welches an einem Werkzeughalter eines ihr benachbarten Magazinrades angeordnet ist oder setzt ein Werkzeug an dem ihr zugewandten freien Werkzeughalter des Magazinrades ab. Die Transfereinrichtung ist zwischen der Spindelposition und der Werkzeugwechselposition in Transferrichtung und entgegen der Transferrichtung linear verschiebbar.

Nach einer weiteren vorteilhaften Ausgestaltung der Erfindung weist die Transfereinrichtung als dritte Endstellung eine Zwischenposition auf, welche sich zwischen der Spindelposition und der Werkzeugwechselposition befindet. In der Zwischenposition ist die Transfereinrichtung derart angeordnet, dass die Magazinräder frei von einer Wechselwirkung mit der Transfereinrichtung rotieren. In dieser Zwischenposition wird die Transfereinrichtung bevorzugt angeordnet, nachdem sie ein erstes Werkzeug an einem der Magazinräder abgesetzt hat und bevor sie ein zweites Werkzeug von dem Magazinrad aufnimmt. Zwischen diesen beiden Aktionen wird die Magazin-Welle mit den Magazinrädern gedreht, so dass das zweite Werkzeug in eine Transferposition gebracht wird, in der es von der Transfereinrichtung aufgenommen werden kann.

Nach einer weiteren vorteilhaften Ausgestaltung der Erfindung weist die Transfereinrichtung eine Ruheposition auf, in die die Transferrichtung bewegt wird, wenn ein Werkzeugwechsel abgeschlossen ist. Bei der Ruheposition handelt es sich um eine weitere Endstellung der Transfereinrichtung. Dabei ist die Ruheposition von der Spindelposition entfernt, so dass die Transfereinrichtung die Bearbeitung des Werkstücks mit der mit einem Werkzeug ausgestatteten Werkzeugspindel nicht beeinträchtigt. Die Transfereinrichtung wird damit nach Abschluss eines Werkzeugwechsels und dem Absetzen eines Werkzeugs an der Werkzeugspindel entgegen der Transferrichtung in ihre Ruheposition bewegt. Dort verbleibt die Transfereinrichtung bis erneut ein Werkzeugwechsel durchgeführt wird. Von dort wird sie bei einem Werkzeugwechsel zu der Werkzeugspindel bewegt, um ein auszutauschendes Werkzeug von der Werkzeugspindel abzunehmen. Die Ruheposition kann mit der Zwischenposition übereinstimmen.

Nach einer weiteren vorteilhaften Ausgestaltung der Erfindung befindet sich die Ruheposition der Transfereinrichtung zwischen der Spindelposition und der Werkzeugwechselposition. Die Ruheposition kann mit der Zwischenposition übereinstimmen.

Nach einer weiteren vorteilhaften Ausgestaltung der Erfindung stimmt die Ruheposition der Transfereinrichtung mit der Werkzeugwechselposition überein. Die Transfereinrichtung wird damit nach Abschluss eines Werkzeugwechsels und dem Absetzen eines Werkzeugs an der Werkzeugspindel entgegen der Transferrichtung zurück zu der der Magazin-Welle am nächsten gelegenen Position bewegt. Dort verbleibt die Transfereinrichtung bis erneut ein Werkzeugwechsel durchgeführt wird. Von dort wird sie bei einem Werkzeugwechsel zur der Werkzeugspindel bewegt, um ein auszutauschendes Werkzeug von der Werkzeugspindel abzunehmen.

Nach einer weiteren vorteilhaften Ausgestaltung der Erfindung weisen die Magazinräder eine Transferposition für die Werkzeughalter auf. In dieser Transferposition ist der in Transferposition befindliche Werkzeughalter unmittelbar benachbart zu der Werkzeugwechselposition der Transfereinrichtung angeordnet, so dass ein an diesem Werkzeughalter angeordnetes Werkzeug an der Transfereinrichtung in Werkzeugwechselposition absetzbar oder ein an der Transfereinrichtung angeordnetes Werkzeug an diesem Werkzeughalter absetzbar ist, sofern dieser frei ist. Die Magazinräder sind derart entlang der Führungsschiene verschiebbar und gemeinsam mit der Magazin-Welle um die Wellenrotationsachse drehbar, dass jeder der Werkzeughalter der Magazinräder in die Transferposition bewegbar ist. Vorteilhafterweise befindet sich zu einem Zeitpunkt genau ein Werkzeughalter in Transferposition, so dass sich nicht mehrere Werkzeughalter gleichzeitig in der Transferposition befinden können.

Nach einer weiteren vorteilhaften Ausgestaltung der Erfindung weist das Werkzeugmagazin eine Anzahl n an Magazinrädern und eine Anzahl m an Werkzeughaltern an allen n Magazinrädern auf. Dabei nimmt das Werkzeugmagazin insgesamt eine Anzahl an Werkzeugen von m - n + 1 auf. Dadurch ist es möglich, dass stets ein Werkzeughalter an jedem Magazinrad frei bleibt, wenn ein Werkzeug an der Transfereinrichtung oder an der Werkzeugspindel angeordnet ist.

Nach einer weiteren vorteilhaften Ausgestaltung der Erfindung ist an jedem der Magazinräder ein Werkzeughalter frei von einem Werkzeug, wenn ein Werkzeug an der Transfereinrichtung oder an der Werkzeugspindel angeordnet ist. Damit steht stets ein freier Werkzeughalter an jedem der Magazinräder zur Verfügung, um im Fall eines Werkzeugwechsels das ursprünglich an der Werkzeugspindel angeordnete Werkzeug an einem Magazinrad abzusetzen und anschließend von demselben Magazinrad ein anderes Werkzeug zu entnehmen.

Das Werkzeugmagazin ist mit einem Linearantrieb ausgestattet, der den Magazin-Schlitten entlang der Führungsschiene bewegt.

Nach einer weiteren vorteilhaften Ausgestaltung der Erfindung sind die Magazinräder parallel zueinander an der Magazin-Welle angeordnet. Die Werkzeughalter sind ausgehend von der Magazin-Welle in radialer Richtung an den Magazinrädern angeordnet.

Nach einer weiteren vorteilhaften Ausgestaltung der Erfindung ist das Werkzeugmagazin mit mindestens drei Magazinrädern ausgestattet. Dabei ist der Abstand zwischen je zwei benachbarten Magazinrädern gleich groß.

Nach einer weiteren vorteilhaften Ausgestaltung der Erfindung ist die Magazin-Welle in mindestens einem Drehlager aufgenommen und an dem Magazin-Schlitten abgestützt. Die Magazin-Welle wird damit sicher und zuverlässig an dem Magazin-Schlitten gehalten. Ein Drehlager mit Abstützung am Magazin-Schlitten kann auch zwischen zwei Magazinrädern vorgesehen sein.

Nach einer weiteren vorteilhaften Ausgestaltung der Erfindung nehmen die Werkzeughalter der Magazinräder die Werkzeuge zusammen mit einem Werkzeugmodul auf. Dabei ist in einem Werkzeugmodul jeweils ein Werkzeug zusammen mit einem Kühlmittelverteiler angeordnet. Durch ein Werkzeugmodul mit Werkzeug und Kühlmittelverteiler wird das Anordnen der mit Kühlmittelverteiler ausgestatteten Werkzeuge an der Werkzeugspindel erleichtert.

Nach einer weiteren vorteilhaften Ausgestaltung der Erfindung ist die Magazin-Welle im wesentlichen parallel zur Führungsschiene ausgerichtet.

Nach einer weiteren vorteilhaften Ausgestaltung der Erfindung nimmt jeder Werkzeughalter genau ein Werkzeug derart auf, dass das Werkzeug mit seiner Werkzeugachse parallel zur Magazin-Welle ausgerichtet ist.

Nach einer weiteren vorteilhaften Ausgestaltung der Erfindung ist die Transfereinrichtung im wesentlichen senkrecht zur Führungsschiene entlang der Transferachse linear verschiebbar an der Maschinenbasis angeordnet. Transferrichtung und Führungsschiene verlaufen damit senkrecht zueinander.

Nach einer weiteren vorteilhaften Ausgestaltung der Erfindung ist die Magazin-Welle im wesentlichen parallel zu der Werkzeugspindel ausgerichtet.

Das erfindungsgemäße Verfahren mit den Merkmalen des Anspruchs 16 zeichnet sich dadurch aus, dass ein an einer Werkzeugspindel angeordnetes erstes Werkzeug schnell und unkompliziert gegen ein zweites an einem Werkzeughalter eines Magazinrades angeordnetes Werkzeug ausgetauscht wird. Dabei weist jedes Magazinrad des Werkzeugmagazins einen freien Werkzeughalter auf. Bei der Durchführung des Verfahrens wird das das zweite Werkzeug enthaltende Magazinrad mit seinem freien Werkzeughalter in eine Transferposition gebracht. Der Werkzeughalter in Transferposition befindet sich dabei unmittelbar an der Werkzeugwechselposition der Transfereinrichtung. In der Zwischenzeit wird die Transfereinrichtung zu der Werkzeugspindel bewegt, so dass sie sich in der Spindelposition befindet. In dieser Spindelposition befindet sich die Transferrichtung unmittelbar an der Werkzeugspindel. Dann übernimmt die Transfereinrichtung das an der Werkzeugspindel angeordnete erste Werkzeug. Anschließend wird die Transfereinrichtung zusammen mit dem ersten Werkzeug in die der Transferrichtung entgegen gesetzte Richtung bis in ihre Werkzeugwechselposition bewegt. Nun befinden sich die mit dem ersten Werkzeug ausgestattete Transfereinrichtung in Werkzeugwechselposition und der freie Werkzeughalter des Magazinrades, das das zweite Werkzeug enthält, in Transferposition. In dieser Einstellung befinden sich das erste Werkzeug und der freie Werkzeughalter unmittelbar gegenüber voneinander. Die Transfereinrichtung setzt das erste Werkzeug an dem freien Werkzeughalter ab, so dass die Transfereinrichtung frei und der bis dahin freie Werkzeugträger mit dem ersten Werkzeug ausgestattet ist. Dann wird die Magazin-Welle zusammen mit allen Magazinrädern gedreht, bis sich das zweite Werkzeug in der Transferposition befindet. Anschließend wird das zweite Werkzeug an der Transfereinrichtung abgesetzt, so dass anschließend der Werkzeughalter, der bis dahin das zweite Werkzeug enthalten hatte, frei ist und die Transfereinrichtung mit dem zweiten Werkzeug ausgestattet ist. Danach wird die Transfereinrichtung mit dem zweiten Werkzeug in Transferrichtung von der Magazin-Welle und den Magazinrädern wegbewegt und zu der Werkzeugspindel hinbewegt. Wenn die Transfereinrichtung die Spindelposition erreicht, setzt sie das zweite Werkzeug an der Werkzeugspindel ab. Dann ist der Werkzeugwechsel abgeschlossen.

Nach einer weiteren vorteilhaften Ausgestaltung der Erfindung wird die Transfereinrichtung zwischen dem Absetzen des ersten Werkzeugs an einem Werkzeughalter und dem Aufnehmen des zweiten Werkzeugs zunächst in Transferrichtung von der Magazin-Welle weg bewegt und verbleibt in einer Zwischenposition zwischen der Werkzeugwechselposition und der Spindelposition. Dann wird die Magazin-Welle gedreht, bis sich das zweite Werkzeug in der Transferposition befindet. Anschließend wird die Transfereinrichtung wieder in Werkzeugwechselposition bewegt um das zweite Werkzeug von dem Werkzeughalter aufzunehmen. Durch die Bewegung der Transfereinrichtung in die Zwischenposition wird die Transfereinrichtung von dem Magazinrad entfernt, so dass die Drehung der Magazinräder nicht durch die Transfereinrichtung beeinträchtigt wird. Das Entfernen der Transfereinrichtung von den Magazinrädern ist insbesondere dann von Vorteil, wenn der Abstand zwischen den Magazinrädern kleiner ist, als die Ausdehnung der Transfereinrichtung in Richtung der Wellenrotationsachse.

Nach einer weiteren vorteilhaften Ausgestaltung der Erfindung erfolgt das Absetzen des ersten Werkzeugs von der Werkzeugspindel auf die Transfereinrichtung und das Bewegen der Transfereinrichtung von der Werkzeugspindel weg in Richtung der Magazin-Welle gleichzeitig mit dem Bewegen des das zweite Werkzeug enthaltenden Magazinrades und das Anordnen des freien Werkzeughalters dieses Magazinrades in Transferposition. Dadurch wird der Vorgang des Werkzeugwechselns beschleunigt. Das Wechseln eines Werkzeugs beansprucht damit nicht mehr Zeit als bei einem Werkzeugmagazin mit nur einem Magazinrad.

Nach einer weiteren vorteilhaften Ausgestaltung der Erfindung wird die Transfereinrichtung nach dem Absetzen des zweiten Werkzeugs an der Werkzeugspindel in die der Transferrichtung entgegen gesetzte Richtung bewegt und in einer Ruheposition angeordnet, welche von der Werkzeugspindel entfernt ist. Die Transfereinrichtung verbleibt in der Ruheposition, bis wieder ein Werkzeugwechsel durchgeführt wird. Die Ruheposition befindet sich dabei in einer Entfernung von der Werkzeugspindel, so dass die Transfereinrichtung die Bearbeitung eines Werkstücks mit der Werkzeugspindel nicht beeinträchtigt.

Weitere Vorteile und vorteilhafte Ausgestaltungen der Erfindung sind der nachfolgen Beschreibung, der Zeichnung und den Ansprüchen entnehmbar.

### Zeichnung

In der Zeichnung ist ein Ausführungsbeispiel der Erfindung dargestellt und im folgenden erläutert. Es zeigen:
- Figur 1: Werkzeugmaschine mit Werkzeugspindel und Werkzeugmagazin in perspektivischer Darstellung,
- Figur 2: Werkzeugmaschine mit Werkzeugspindel und Werkzeugmagazin gemäß Figur 1 in einer Ansicht von vorne,
- Figur 3: Werkzeugmaschine mit Werkzeugspindel und mit Werkzeugmagazin gemäß Figur 1 in einer Ansicht von oben,
- Figur 4: Werkzeugmaschine mit Werkzeugspindel und mit Werkzeugmagazin gemäß Figur 1 in einer Ansicht von der Seite,
- Figur 5: Werkzeugmaschine mit Werkzeugspindel und Werkzeugmagazin gemäß Figur 1, wobei das Werkzeugmagazin einschließlich der Transfereinrichtung frei von Werkzeugen ist und sich die Transfereinrichtung an den Magazinrädern befindet,
- Figur 6: Werkzeugmaschine gemäß Figur 5 in einer Ansicht von vorne,
- Figur 7: Werkzeugmaschine gemäß Figur 5, wobei sich die Transfereinrichtung zwischen der Werkzeugspindel und den Magazinrädern befindet,
- Figur 8: Werkzeugmaschine gemäß Figur 5 mit einem Werkzeug an der Transfereinrichtung, wobei sich die Transfereinrichtung in einer Spindelposition befindet,
- Figur 9: Werkzeugmaschine gemäß Figur 8, wobei sich die Transfereinrichtung in einer Werkzeugwechselposition befindet,
- Figur 10: Werkzeugmaschine gemäß Figur 8, wobei sich die Transfereinrichtung in einer Zwischenposition befindet.

### Beschreibung des Ausführungsbeispiels

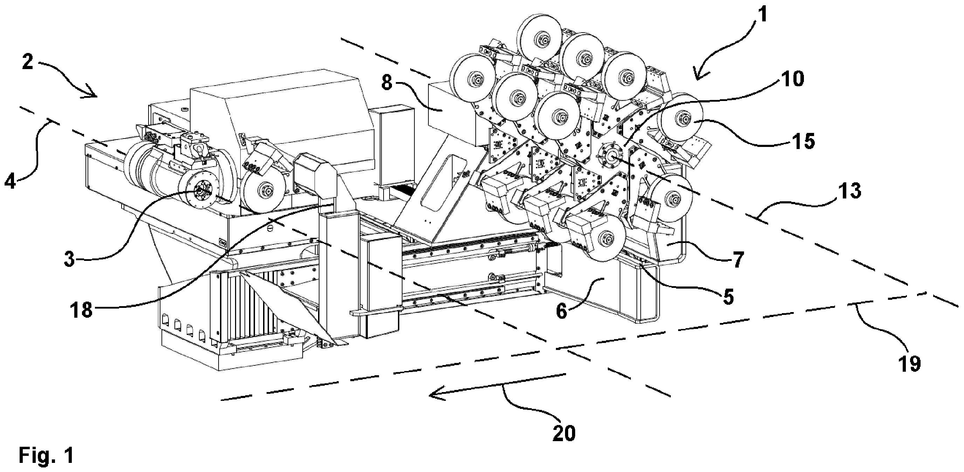

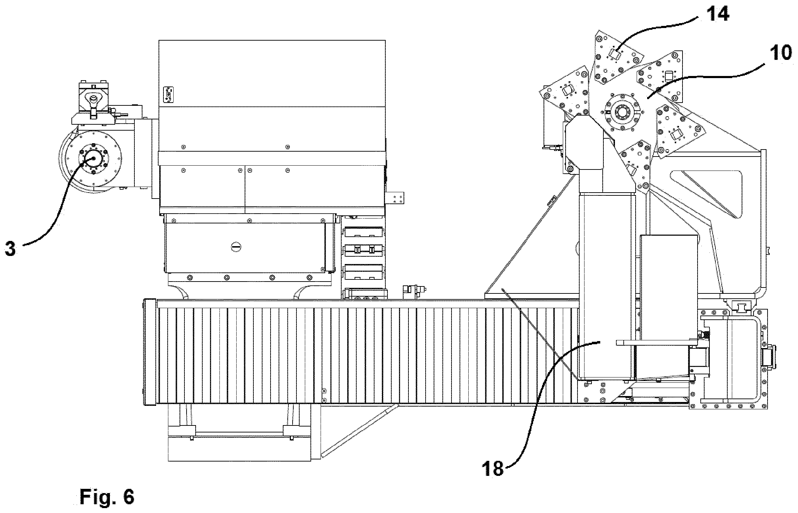

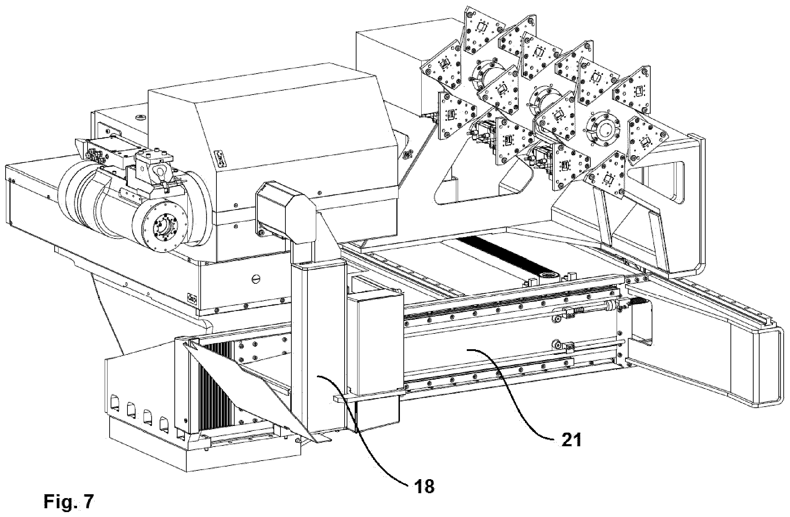

In den Figuren 1 bis 10 ist ein Werkzeugmagazin 1 dargestellt, welches an einer Werkzeugmaschine 2 angeordnet ist. Die Werkzeugmaschine 2 weist eine Werkzeugspindel 3 auf, die um eine Spindelachse 4 zur Rotation angetrieben wird. Das Werkzeugmagazin 1 weist eine Führungsschiene 5 auf, die an einer mit der Werkzeugmaschine 2 gemeinsamen Maschinenbasis 6 angeordnet ist. Ferner umfasst das Werkzeugmagazin 1 einen Magazin-Schlitten 7, der an der Führungsschiene 5 linear verschiebbar angeordnet ist. Die Führungsschiene 5 gibt dabei die lineare Achse vor, entlang der der Magazin-Schlitten 7 verschiebbar ist. An dem Magazin-Schlitten 7 sind ein Rotationsantrieb 8, eine Magazin-Welle 9 und drei Magazinräder 10, 11, 12 angeordnet. Dabei treibt der Rotationsantrieb 8 die Magazin-Welle 9 zu einer Rotation um ihre Wellenrotationsachse 13 an. Die Wellenrotationsachse 13 ist parallel zu der Führungsschiene 5. An der Magazin-Welle 9 sind die drei Magazinräder 10, 11, 12 drehfest angeordnet, so dass bei einer Rotation der Magazin-Welle 9 um ihre Wellenrotationsachse 13 alle drei Magazinräder 10, 11, 12 ebenfalls um die Wellenrotationsachse 13 gedreht werden. Jedes der drei Magazinräder 10, 11, 12 ist mit sechs Werkzeughaltern 14 ausgestattet. In den Figuren 1 bis 4 ist von den sechs Werkzeughaltern jeweils ein Werkzeughalter pro Magazinrad 10, 11, 12 frei. Ein weiteres Werkzeug ist in den Figuren 1 bis 4 an der Transfereinrichtung angeordnet. Ein Werkzeughalter ist frei, wenn an ihm kein Werkzeug angeordnet ist. An den übrigen Werkzeughaltern sind in den Figuren 1 bis 4 als Werkzeuge 15 Schleifscheiben angeordnet. Jede der Schleifscheiben ist zusammen mit einem Kühlmittelverteiler 16 an einem Werkzeugmodul 17 angeordnet. Die Werkzeugmodule 17 werden an den Werkzeughaltern 14 der Magazinräder 10, 11, 12 angeordnet.

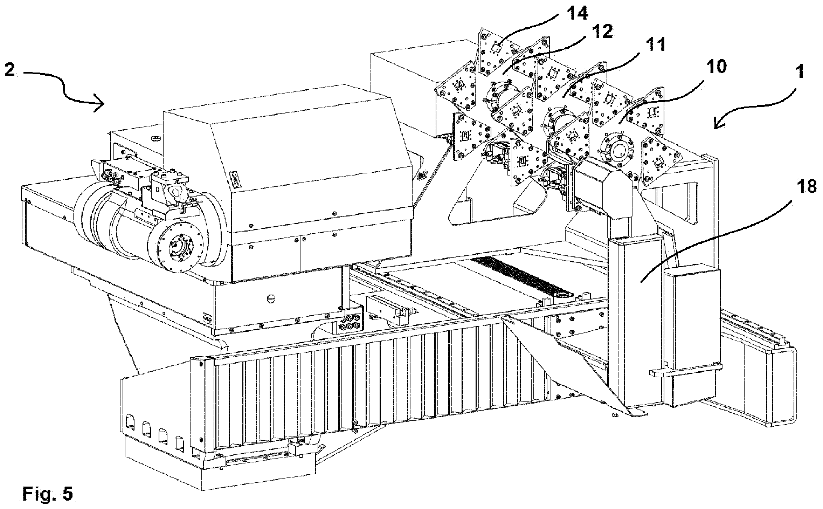

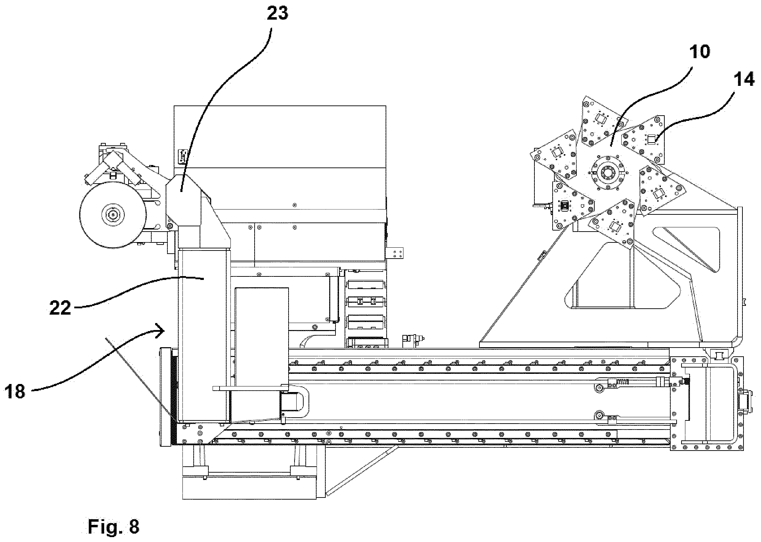

In den Figuren 5 bis 10 sind zur besseren Übersicht alle Werkzeughalter 14 der Magazinräder 10, 11, 12 frei von Werkzeugen. Damit sind die Magazinräder 10, 11, 12 und die Werkzeughalter 14 der Magazinräder 10, 11, 12 besser erkennbar. In den Figuren 5 bis 7 ist auch die Transfereinrichtung frei von einem Werkzeug. In den Figuren 8 bis 10 ist an der Transfereinrichtung ein Werkzeug 15 angeordnet.

Die Wellenrotationsachse 13, die Führungsschiene 5 und die Spindelachse 4 verlaufen parallel. Die Schleifscheiben sind an den Magazinrädern 10, 11, 12 derart angeordnet, dass die Werkzeugachsen der Schleifscheiben parallel zu der Spindelachse ausgerichtet sind. Die Werkzeugachsen bleiben auch während ihres Transports von den Magazinrädern 10, 11, 12 zu der Werkzeugspindel 3 und zurück parallel zu der Spindelachse 4 ausgerichtet. Da im dargestellten Ausführungsbeispiel die Wellenrotationsachse 13 und die Führungsschiene 5 parallel zu der Spindelachse 4 sind, verläuft die Werkzeugachse der Schleifscheiben auch parallel zu der Wellenrotationsachse 13 und zu der Führungsschiene 5.

Eine Transfereinrichtung 18 ist an der Maschinenbasis 6 linear verschiebbar angeordnet. Die lineare Achse, entlang der die Transfereinrichtung 18 in einer Transferrichtung 20 und entgegen der Transferrichtung verschiebbar ist, verläuft senkrecht zu der Spindelachse 4, der Führungsschiene 5 und der Wellenrotationsachse 13. Sie wird als Transferachse 19 bezeichnet. Zur linearen Verschiebung entlang der Transferachse 19 ist die Maschinenbasis 6 mit einer Transfereinrichtungs-Führungsschiene 21 ausgestattet, an der die Transfereinrichtung verschiebbar aufgenommen ist. Die Transfereinrichtung 18 weist einen nach oben ausgerichteten Transferarm 22 und eine daran angeordnete Halteeinrichtung 23 für ein Werkzeug 25 auf.

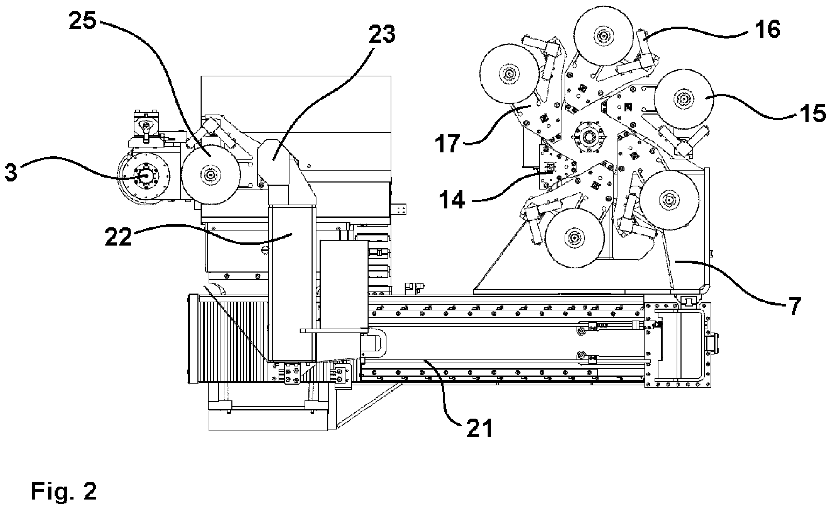

Die Transfereinrichtung 18 transportiert Werkzeuge 15, 25 von den Magazinrädern 10, 11, 12 zu der Werkzeugspindel 3 und umgekehrt. Hierzu wird sie zwischen einer Spindelposition unmittelbar an der Werkzeugspindel und einer Werkzeugwechselposition unmittelbar an den Magazinrädern 10, 11, 12 entlang der Transferachse 19 hin- und herbewegt. In den Figuren 1 und 2 ist die Transfereinrichtung 18 in einer Position nahe der Werkzeugspindel 3 dargestellt. An der Halteeinrichtung 23 ist ein Werkzeug 25 angeordnet, das von der Werkzeugspindel 3 abgenommen wurde.

Die Halteeinrichtung 23 steht über den Transferarm 22 in Richtung der Werkzeugspindel 3 vor. Dies hat zur Folge, dass die Transfereinrichtung 18 bei ihrer Bewegung zwischen der Spindelposition und der Werkzeugwechselposition nicht über die Spindelachse 4 in die dem Werkzeugmagazin 1 abgewandte Richtung übersteht. Damit steht diese dem Werkzeugmagazin abgewandte Seite für andere Komponenten der Werkzeugmaschine zur Verfügung. Beispielsweise kann auf dieser dem Werkzeugmagazin 1 abgewandten Seite der Spindelachse eine Vorrichtung zum Wechseln und/ oder Halten eines mit der Werkzeugspindel zu bearbeitenden Werkstücks angeordnet sein. Eine Wechselwirkung zwischen dem Werkzeugmagazin und derartigen sonstigen Komponenten der Werkzeugmaschine kann auf diese Weise ausgeschlossen werden. Somit kann ein Werkzeugwechsel und ein Werkstückwechsel gleichzeitig erfolgen.

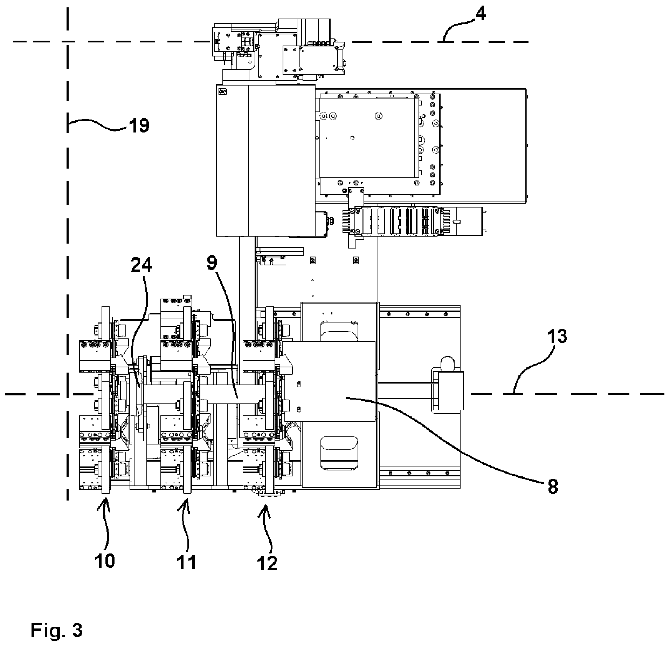

Figur 3 zeigt das Werkzeugmagazin 1 und die Werkzeugmaschine 2 mit Werkzeugspindel 3 in einer Ansicht von oben. Die Transfereinrichtung ist in Figur 3 nicht dargestellt. In dieser Darstellung ist erkennbar, dass die Magazin-Welle 9 mit ihrem einen Ende in dem Rotationsantrieb 8 aufgenommen ist und ferner durch ein Drehlager 24 abgestützt ist. Dieses befindet sich zwischen dem Magazinrad 10, welches die größte Entfernung zum Rotationsantrieb 8 aufweist, und dem mittleren Magazinrad 11. In der Darstellung ist ferner erkennbar, dass die drei Magazinräder 10, 11 und 12 parallel zueinander sind und den gleichen Abstand zueinander aufweisen.

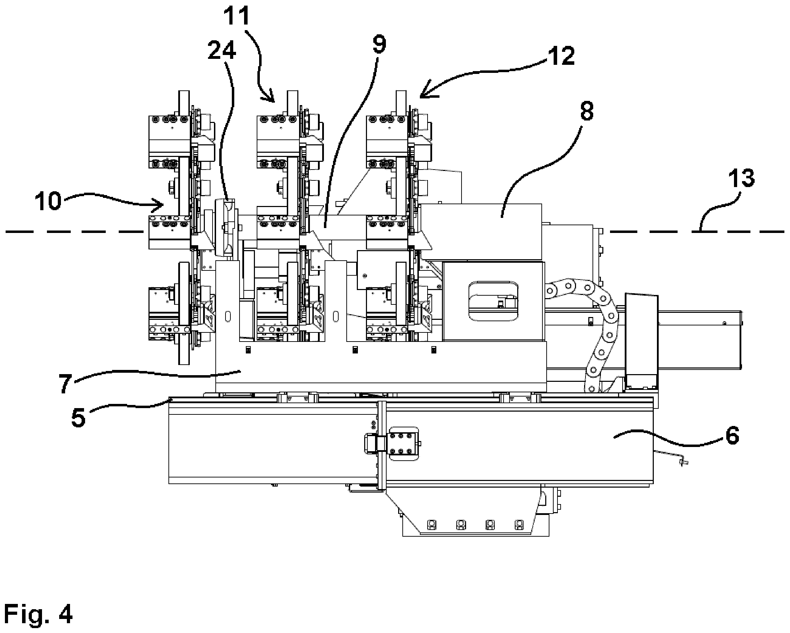

Figur 4 zeigt das Werkzeugmagazin 1 und die Werkzeugmaschine 2 in einer Seitenansicht. Auch in dieser Darstellung ist erkennbar, dass die Magazinräder 10 und 11 denselben Abstand zueinander haben wie die beiden Magazinräder 11 und 12 und dass die Magazinräder 10, 11 und 12 parallel zueinander und senkrecht zu der Magazin-Welle 9 angeordnet sind.

Vor der Werkzeugspindel 3 wird bei der Werkzeugmaschine 2 eine in der Zeichnung nicht dargestellte Werkstückaufnahme angeordnet. In der Werkstückaufnahme wird ein mit der Werkzeugspindel zu bearbeitendes Werkstück angeordnet. Dieses Werkstück ist in der Zeichnung ebenfalls nicht dargestellt. Um das Werkstück unter verschiedenen Winkeln gegen die Werkzeugspindel ausrichten zu können, ist die Werkstückaufnahme in der Regel um mehrere Achsen beweglich an der Maschinenbasis angeordnet. Aus diesem Grund beansprucht die Werkstückaufnahme einen gewissen Raum vor der Werkzeugspindel. Dieser von der Werkstückaufnahme beanspruchte Raum ist in Richtung der Spindelachse 4 größer als der von dem Werkzeugmagazin in Richtung der Wellenrotationsachse 13 beanspruchte Raum. Damit steht das Werkzeugmagazin nicht über die Werkzeugmaschine in einer Richtung parallel zur Spindelachse über. Die Werkstückaufnahme ist zusammen mit der Werkzeugspindel in einem in der Zeichnung nicht dargestellten Gehäuse angeordnet. Dieses Gehäuse umschließt auch das Werkzeugmagazin. Aus der Darstellung gemäß Figur 4 ergibt sich, dass das Werkzeugmagazin in einem Gehäuse der Werkzeugmaschine von den äußeren Maßen eines Maschinengehäuses gegenüber einer Werkzeugmaschine mit einem bekannten Werkzeugmagazin mit Magazinrad keinen zusätzlichen Raum beansprucht.

Die Figuren 8 bis 10 zeigen die verschiedenen Endstellungen der Transfereinrichtung 18. In diesen Endstellungen wird die Transfereinrichtung 18 angehalten, so dass die Transfereinrichtung für eine gewisse Zeit in diesen Endstellungen verbleibt. Figur 8 zeigt die Transfereinrichtung in einer Endstellung, die als Spindelposition bezeichnet wird. In dieser Position befindet sich die Transfereinrichtung 18 unmittelbar an der Werkzeugspindel 3, so dass ein Werkzeug, im Ausführungsbeispiel eine Schleifscheibe, zwischen der Werkzeugspindel und der Halteeinrichtung 23 der Transfereinrichtung 18 ausgetauscht werden kann.

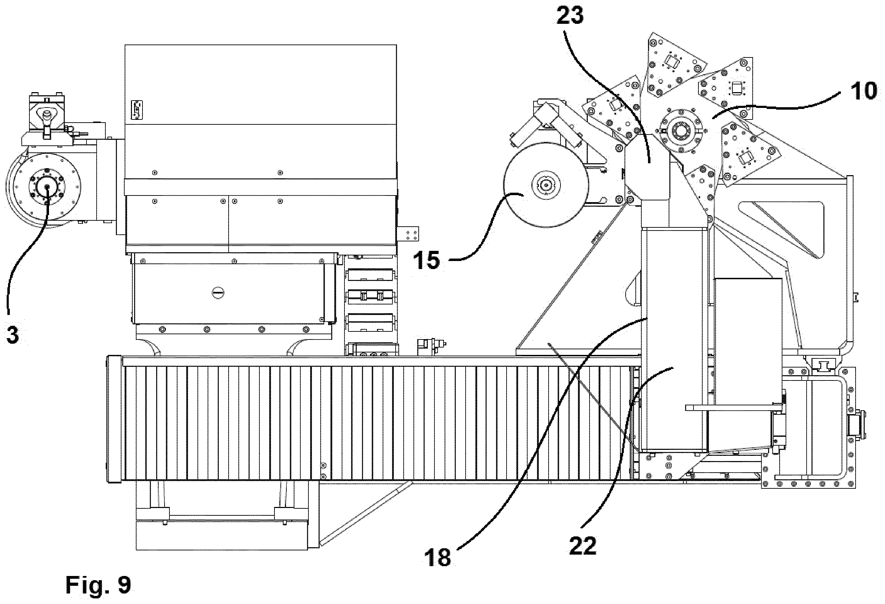

Figur 9 zeigt die Transfereinrichtung 18 in einer Endstellung, die als Werkzeugwechselposition bezeichnet wird. In dieser Position befindet sich die Transfereinrichtung in ihrer der Wellenrotationsachse 13 der Magazinwelle 9 am nächsten gelegenen Stellung. In der Werkzeugwechselposition kann ein Werkzeug zwischen der Transfereinrichtung und einem der Magazinräder 10, 11, 12 ausgetauscht werden. Der Austausch erfolgt dabei zwischen dem in Transferposition befindlichen Werkzeugträger und der Halteeinrichtung der Transfereinrichtung.

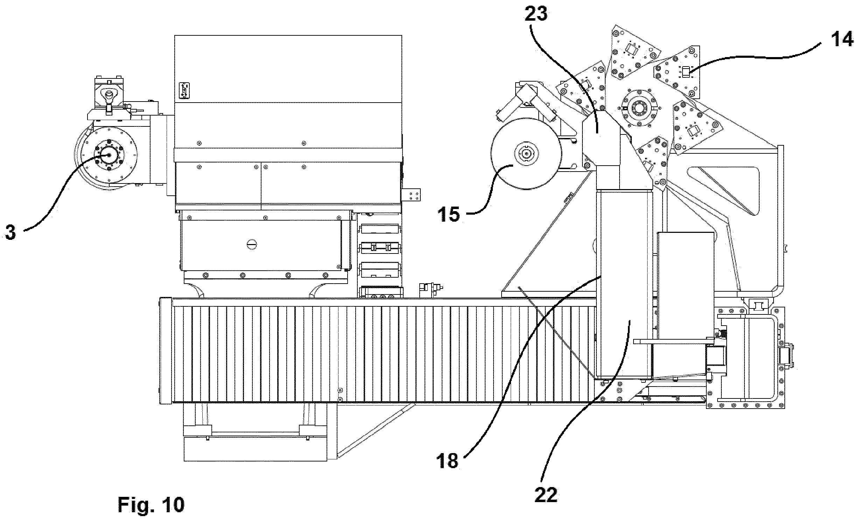

Figur 10 zeigt die Transfereinrichtung in einer Stellung, die als Zwischenposition bezeichnet wird. In der Zwischenposition befindet sich die Transfereinrichtung zwischen der Werkzeugwechselposition gemäß Figur 9 und der Spindelposition gemäß Figur 8. Die Distanz zwischen der Zwischenposition und der Werkzeugwechselposition ist minimal. In der Zwischenposition ist die Transfereinrichtung soweit in Richtung der Werkzeugspindel 3 verschoben, dass die Magazinräder 10, 11, 12 um die Wellenrotationsachse gedreht werden können, ohne dass die Rotation durch die Transfereinrichtung oder ein an der Transfereinrichtung angeordnetes Werkzeug beeinträchtigt wird.

Der Ablauf eines Werkzeugwechsels wird in Bezug auf Figur 2 erläutert: Das vor kurzen noch an der Werkzeugspindel 3 angeordnete Werkzeug 25, welches im folgenden als erstes Werkzeug bezeichnet wird, soll gegen das Werkzeug 15 des Magazinrades 10 ausgetauscht werden. Das Werkzeug 15 des Magazinrades 10 wird im folgenden als zweites Werkzeug bezeichnet. Hierzu wird das das Werkzeug 15 enthaltende Magazinrad 10 mit seinem freien Werkzeughalter 14 in eine Transferposition gebracht. Der Werkzeughalter 14 in Transferposition befindet sich dabei unmittelbar an der Werkzeugwechselposition der Transfereinrichtung 18. In der Zwischenzeit wird die Transfereinrichtung 18 zu der Werkzeugspindel 3 bewegt, so dass sie sich in der Spindelposition befindet. In dieser Spindelposition befindet sich die Transferrichtung 18 unmittelbar an der Werkzeugspindel 3. Dann übernimmt die Transfereinrichtung 18 das an der Werkzeugspindel 3 angeordnete erste Werkzeug 25. Anschließend wird die Transfereinrichtung zusammen mit dem ersten Werkzeug 25 in die der Transferrichtung 20 entgegen gesetzte Richtung bis in ihre Werkzeugwechselposition bewegt. Nun befinden sich die mit dem ersten Werkzeug 25 ausgestattete Transfereinrichtung 18 in Werkzeugwechselposition und der freie Werkzeughalter 14 des Magazinrades 10, das das zweite Werkzeug 15 enthält, in Transferposition. In dieser Einstellung befinden sich das erste Werkzeug 25 und der freie Werkzeughalter 14 unmittelbar gegenüber voneinander. Die Transfereinrichtung 18 setzt das erste Werkzeug 25 an dem freien Werkzeughalter 14 ab, so dass die Transfereinrichtung 18 frei und der bis dahin freie Werkzeugträger 14 mit dem ersten Werkzeug 25 ausgestattet ist. Dann wird die Transfereinrichtung in die Zwischenposition bewegt, so dass sich die Magazin-Welle 9 zusammen mit allen Magazinrädern 10, 11, 12 ungehindert drehen können. Magazin-Welle 9 und die Magazinräder 10, 11, 12 werden so weit gedreht, bis sich das zweite Werkzeug 15 in der Transferposition befindet. Anschließend wird das zweite Werkzeug 15 an der Transfereinrichtung 18 abgesetzt, so dass anschließend der Werkzeughalter, der bis dahin das zweite Werkzeug enthalten hatte, frei ist und die Transfereinrichtung 18 mit dem zweiten Werkzeug 15 ausgestattet ist. Danach wird die Transfereinrichtung 18 mit dem zweiten Werkzeug 15 in Transferrichtung 20 von der Magazin-Welle 9 und den Magazinrädern 10, 11 12 wegbewegt und zu der Werkzeugspindel 3 hinbewegt. Wenn die Transfereinrichtung 18 die Spindelposition erreicht, setzt sie das zweite Werkzeug 15 an der Werkzeugspindel 3 ab. Dann ist der Werkzeugwechsel abgeschlossen.

### Bezugszahlen

- 1: Werkzeugmagazin
- 2: Werkzeugmaschine
- 3: Werkzeugspindel
- 4: Spindelachse
- 5: Führungsschiene
- 6: Maschinenbasis
- 7: Magazin-Schlitten
- 8: Rotationsantrieb
- 9: Magazin-Welle
- 10: Magazinrad
- 11: Magazinrad
- 12: Magazinrad
- 13: Wellenrotationsachse
- 14: Werkzeughalter
- 15: Werkzeug
- 16: Kühlmittelverteiler
- 17: Werkzeugmodul
- 18: Transfereinrichtung
- 19: Transferachse
- 20: Transferrichtung
- 21: Transfereinrichtungs-Führungsschiene
- 22: Transferarm
- 23: Halteeinrichtung
- 24: Drehlager
- 25: Werkzeug

## Patentansprüche

1. Werkzeugmagazin zur Aufnahme mehrerer Werkzeuge, welche zur Anordnung an einer Werkzeugspindel einer Werkzeugmaschine vorgesehen sind,
mit einer an einer Maschinenbasis (6) ortsfest anordenbaren Führungsschiene (5),
mit einem Rotationsantrieb (8), welcher ein Drehmoment auf eine drehbar angeordnete Magazin-Welle (9) überträgt und die Magazin-Welle (9) um eine Wellenrotationsachse (13) dreht,
mit mindestens zwei drehfest an der Magazin-Welle (9) angeordneten Magazinrädern (10, 11, 12),
mit mindestens zwei Werkzeughaltern (14) an jedem der Magazinräder (10, 11, 12), wobei jeder Werkzeughalter (14) genau ein Werkzeug (15) aufnehmen kann
mit einer quer zur Führungsschiene (5) entlang einer Transferachse (19) linear verschiebbar an der Maschinenbasis (6) anordenbaren
Transfereinrichtung (18), welche derart ausgebildet ist, dass sie ein an einem der Werkzeughalter (14) der Magazinräder (10, 11, 12) angeordnetes Werkzeug (15) aufnimmt, entlang der Transferachse (19) von dem Werkzeughalter (14) weg und zu der Werkzeugspindel (3) hin transportiert und an der Werkzeugspindel (3) absetzt, und welche darüber hinaus derart ausgebildet ist, dass sie ein an der Werkzeugspindel (3) angeordnetes Werkzeug (25) aufnimmt, entlang der Transferachse (19) von der Werkzeugspindel (3) weg und zu einem freien Werkzeughalter (14) eines Magazinrades (10, 11, 12) hin transportiert und an dem freien Werkzeughalter (14) absetzt,
**dadurch gekennzeichnet,**
**dass** an der Führungsschiene (5) ein Magazin-Schlitten (7) verschiebbar gelagert ist,
**dass** der Rotationsantrieb (8) an dem Magazin-Schlitten (7) angeordnet ist,
**dass** die Magazin-Welle (9) drehbar an dem Magazin-Schlitten (7) angeordnet ist,
**dass** das Werkzeugmagazin mit einem Linearantrieb ausgestattet ist, der den Magazin-Schlitten (7) entlang der Führungsschiene (5) bewegt.

2. Werkzeugmagazin nach Anspruch 1, **dadurch gekennzeichnet, dass** die Transfereinrichtung (18) mindestens zwei Endstellungen aufweist:
- eine Spindelposition, in welcher sich die Transfereinrichtung (18) in ihrer der Werkzeugspindel (3) am nächsten gelegenen Position befindet um ein an der Werkzeugspindel (3) angeordnetes Werkzeug (25) aufzunehmen oder ein Werkzeug (15) an der Werkzeugspindel (3) abzusetzen, und
- eine Werkzeugwechselposition, in welcher sich die Transfereinrichtung (18) in ihrer der Magazin-Welle am nächsten gelegenen Position befindet, um ein an einem Werkzeughalter (14) des ihr zugewandten Magazinrads (10) angeordnetes Werkzeug (15) aufzunehmen oder ein Werkzeug (25) an dem ihr zugewandten freien Werkzeughalter (14) des Magazinrades (10) abzusetzen,
und dass die Transfereinrichtung (18) zwischen der Spindelposition und der Werkzeugwechselposition entlang der Transferachse (19) linear verschiebbar ist.

3. Werkzeugmagazin nach Anspruch 2, **dadurch gekennzeichnet, dass** die Transfereinrichtung (18) als dritte Endstellung eine Zwischenposition aufweist, welche sich zwischen der Spindelposition und der Werkzeugwechselposition befindet, und in welcher die Magazinräder (10, 11,12) frei von einer Wechselwirkung mit der Transfereinrichtung (18) rotieren.

4. Werkzeugmagazin nach einem der vorhergehenden Ansprüche, **dadurch gekennzeichnet, dass** die Magazinräder (10, 11, 12) eine Transferposition für die Werkzeughalter aufweisen, in der der in Transferposition befindliche Werkzeughalter (14) unmittelbar benachbart zu der Werkzeugwechselposition der Transfereinrichtung (18) angeordnet ist, derart dass ein an diesem Werkzeughalter (14) angeordnetes Werkzeug (15) an der Transfereinrichtung (18) in Werkzeugwechselposition absetzbar oder ein an der Transfereinrichtung angeordnetes Werkzeug an diesem Werkzeughalter absetzbar ist, sofern dieser frei ist, und dass die Magazinräder (10, 11, 12) derart entlang der Führungsschiene (5) verschiebbar und gemeinsam mit der Magazin-Welle (9) um die Wellenrotationsachse (13) drehbar sind, dass jeder der Werkzeughalter (14) der Magazinräder (10, 11, 12) in die Transferposition bewegbar ist.

5. Werkzeugmagazin nach einem der vorhergehenden Ansprüche, **dadurch gekennzeichnet, dass** es eine Anzahl n an Magazinrädern (10, 11, 12) und eine Anzahl m an Werkzeughaltern (14) an allen n Magazinrädern aufweist, und dass das Werkzeugmagazin (1) insgesamt eine Anzahl an Werkzeugen (15, 25) von m - n + 1 aufnimmt.

6. Werkzeugmagazin nach einem der vorhergehenden Ansprüche, **dadurch gekennzeichnet, dass** an jedem der Magazinräder (10, 11, 12) ein Werkzeughalter (14) frei von einem Werkzeug ist, wenn ein Werkzeug an der Transfereinrichtung oder an der Werkzeugspindel angeordnet ist.

7. Werkzeugmagazin nach einem der vorhergehenden Ansprüche, **dadurch gekennzeichnet, dass** die Magazinräder (10, 11, 12) parallel zueinander an der Magazin-Welle (9) angeordnet sind.

8. Werkzeugmagazin nach einem der vorhergehenden Ansprüche, **dadurch gekennzeichnet, dass** es mit mindestens drei Magazinrädern (10, 11, 12) ausgestattet ist und dass der Abstand zwischen je zwei benachbarten Magazinrädern (10, 11, 12) gleich ist.

9. Werkzeugmagazin nach einem der vorhergehenden Ansprüche, **dadurch gekennzeichnet, dass** die Magazin-Welle (9) in mindestens einem Drehlager (24) aufgenommen und an dem Magazin-Schlitten (7) abgestützt ist.

10. Werkzeugmagazin nach einem der vorhergehenden Ansprüche, **dadurch gekennzeichnet, dass** die Werkzeughalter (14) der Magazinräder (10, 11, 12) die Werkzeuge (15) zusammen mit einem Werkzeugmodul (17) aufnehmen, wobei in einem Werkzeugmodul (17) jeweils ein Werkzeug (15) zusammen mit einem Kühlmittelverteiler (16) angeordnet ist.

11. Werkzeugmagazin nach einem der vorhergehenden Ansprüche, **dadurch gekennzeichnet, dass** die Magazin-Welle (9) im wesentlichen parallel zur Führungsschiene (5) ausgerichtet ist.

12. Werkzeugmagazin nach einem der vorhergehenden Ansprüche, **dadurch gekennzeichnet, dass** jeder Werkzeughalter (14) derart ausgebildet ist, dass er genau ein Werkzeug (15) derart aufnimmt, dass das Werkzeug (15) mit seiner Werkzeugachse parallel zur Magazin-Welle (9) ausgerichtet ist.

13. Werkzeugmagazin nach einem der vorhergehenden Ansprüche, **dadurch gekennzeichnet, dass** die Transfereinrichtung (18) im wesentlichen senkrecht zur Führungsschiene (5) entlang der Transferachse (19) linear verschiebbar an der Maschinenbasis (6) angeordnet ist.

14. Werkzeugmagazin nach einem der vorhergehenden Ansprüche, **dadurch gekennzeichnet, dass** die Magazin-Welle (9) im wesentlichen parallel zu der Werkzeugspindel ausgerichtet ist.

15. Verfahren zum Wechseln von Werkzeugen an einer Werkzeugmaschine mit Werkzeugspindel, wobei die Werkzeugmaschine (2) mit einem Werkzeugmagazin (1) nach einem der vorhergehenden Ansprüchen ausgestattet ist und an jedem Magazinrad (10, 11, 12) mindestens ein freier Werkzeughalter (14) vorgesehen ist, **gekennzeichnet durch** folgende Verfahrensschritte:
Anordnen der Transfereinrichtung (18) in einer Spindelposition, in welcher sich die Transfereinrichtung (18) in ihrer der Werkzeugspindel (3) am nächsten gelegenen Position befindet,
Aufnehmen eines an der Werkzeugspindel (3) angeordneten ersten Werkzeugs (25) durch die Transfereinrichtung (18),
Drehen der Magazinräder (10, 11, 12) und/ oder Verschieben des Magazin-Schlittens (7) derart, dass sich ein freier Werkzeughalter (14) des Magazinrads (10), welches ein an der Werkzeugspindel (3) anzuordnendes zweites Werkzeug (15) enthält, in einer Transferposition befindet, in der das an der Transfereinrichtung (18) angeordnete erste Werkzeug (25) an dem freien Werkzeughalter (14) absetzbar ist,
Bewegen der Transfereinrichtung (18) entlang der Transferachse (19) weg von der Werkzeugspindel (3) in eine Werkzeugwechselposition, in welcher sich die Transfereinrichtung (18) in ihrer dem Magazinrad (10) mit dem zweiten Werkzeug (15) am nächsten gelegenen Position befindet, und
sich die Transfereinrichtung (18) mit dem ersten Werkzeug (25) einerseits und der freie Werkzeughalter (14) des Magazinrads (10), welches das zweite Werkzeug (15) enthält, in der Transferposition andererseits unmittelbar gegenüberliegen,
Absetzen des an der Transfereinrichtung (18) angeordneten ersten Werkzeugs (25) an dem freien Werkzeughalter (14) des Magazinrades (10) mit dem zweiten Werkzeug (15),
Drehen des Magazinrades (10), an welchem das zweite Werkzeug (15) angeordnet ist, bis sich der Werkzeughalter mit dem zweiten Werkzeug (15) in der Transferposition befindet,
Absetzen des zweiten Werkzeugs (15) an der Transfereinrichtung (18),
Bewegen der Transfereinrichtung (18) entlang der Transferachse weg von dem Magazinrad (10) hin zu der Werkzeugspindel (3), bis sich die Transfereinrichtung (18) mit dem zweiten Werkzeug (15) in der Spindelposition befindet,
Absetzen des zweiten Werkzeugs (15) an der Werkzeugspindel (3).

16. Verfahren nach Anspruch 15, **dadurch gekennzeichnet, dass** die Transfereinrichtung (18) zwischen dem Absetzen des ersten Werkzeugs (25) und dem Aufnehmen des zweiten Werkzeugs (15) entlang der Transferachse (19) von der Magazin-Welle weg in eine Zwischenposition bewegt wird, dann die Magazin-Welle (9) gedreht wird, bis sich das zweite Werkzeug (15) in der Transferposition befindet und anschließend die Transfereinrichtung (18) wieder in Werkzeugwechselposition bewegt wird um das zweite Werkzeug (15) von dem Werkzeughalter aufzunehmen.

17. Verfahren nach Anspruch 15 oder 16, **dadurch gekennzeichnet, dass** das Absetzen des ersten Werkzeugs (25) von der Werkzeugspindel (3) auf die Transfereinrichtung (18) und das Bewegen der Transfereinrichtung (18) von der Werkzeugspindel (3) weg in Richtung der Magazin-Welle (9) gleichzeitig erfolgt mit dem Bewegen des das zweite Werkzeug (15) enthaltenden Magazinrades (10) und das Anordnen des freien Werkzeughalters (14) dieses Magazinrades (10) in Transferposition.

18. Verfahren nach einem der Ansprüche 15 bis 17, **dadurch gekennzeichnet, dass** die Transfereinrichtung (18) nach dem Absetzen des zweiten Werkzeugs (15) an der Werkzeugspindel (3) entlang der Transferachse (19) bewegt und in einer Ruheposition angeordnet wird, welche von der Werkzeugspindel (3) entfernt ist.

## Claims

1. Tool magazine for receiving a plurality of tools which are provided for arrangement on a tool spindle of a machine tool,
with a guide rail (5) that can be arranged in a fixed position on a machine base (6),
with a rotary drive (8), which transmits a torque to a rotatably arranged magazine shaft (9) and rotates the magazine shaft (9) about a shaft rotation axis (13),
with at least two magazine wheels (10, 11, 12) arranged on the magazine shaft (9) in a non-rotating manner,
with at least two tool holders (14) on each of the magazine wheels (10, 11, 12), whereby each tool holder (14) can receive exactly one tool (15),
with a transfer device (18) which can be arranged on the machine base (6) so as to be linearly displaceable transversely to the guide rail (5) along a transfer axis (19) and which is designed in such a way that it receives a tool (15) arranged on one of the tool holders (14) of the magazine wheels (10, 11, 12), transports it along the transfer axis (19) away from the tool holder (14) and towards the tool spindle (3) and deposits it on the tool spindle (3), and which is furthermore designed in such a way that it receives a tool (25) arranged on the tool spindle (3), transports it along the transfer axis (19) away from the tool spindle (3) and towards a free tool holder (14) of a magazine wheel (10, 11, 12) and deposits it on the free tool holder (14),
**characterised in that**
a magazine carriage (7) is displaceably mounted on the guide rail (5),
the rotary drive (8) is arranged on the magazine carriage (7),
the magazine shaft (9) is rotatably arranged on the magazine carriage (7),
the tool magazine is equipped with a linear drive which moves the magazine carriage (7) along the guide rail (5).

2. Tool magazine according to claim 1, **characterised in that** the transfer device (18) has at least two end positions:
- a spindle position, in which the transfer device (18) is located in its position nearest the tool spindle (3) and picks up a tool (25) arranged on the tool spindle (3) or sets a tool (15) down on the tool spindle (3), and
- a tool change position, in which the transfer device (18) picks up a tool (15) arranged on a tool holder (14) of the magazine wheel (10) facing the transfer device or sets a tool (25) down on the free tool holder (14) of the magazine wheel (10) facing the transfer device, and that the transfer device (18) is linearly displaceable along the transfer axis (19) between the spindle position and the tool change position.

3. Tool magazine according to claim 2, **characterised in that** the transfer device (18) has as a third end position an intermediate position which is located between the spindle position and the tool change position and in which the magazine wheels (10, 11, 12) rotate free of interaction with the transfer device (18).

4. Tool magazine according to one of the previous claims, **characterised in that** the magazine wheels (10, 11, 12) have a transfer position for the tool holders in which the tool holder (14) located in the transfer position is arranged immediately adjacent to the tool change position of the transfer device (18) such that a tool (15) arranged on this tool holder (14) can be set down in the tool change position on the transfer device (18) or a tool arranged on the transfer device can be set down on this tool holder, if this is free, and that the magazine wheels (10, 11, 12) are displaceable along the guide rail (5) and together with the magazine shaft (9) rotatable around the shaft axis of rotation (13) such that each of the tool holders (14) of the magazine wheels (10, 11, 12) can be moved into the transfer position.

5. Tool magazine according to one of the previous claims, **characterised in that** it comprises a number n of magazine wheels (10, 11, 12) and a number m of tool holders (14) at all n magazine wheels, and that the tool magazine (1) receives a total number of tools (15, 25) of m - n + 1.

6. Tool magazine according to one of the previous claims, **characterised in that** on each of the magazine wheels (10, 11, 12) a tool holder (14) is always free of a tool when a tool is arranged on the transfer device or on the tool spindle.

7. Tool magazine according to one of the previous claims, **characterised in that** the magazine wheels (10, 11, 12) are arranged parallel to one another on the magazine shaft (9).

8. Tool magazine according to one of the previous claims, **characterised in that** it comprises at least three magazine wheels (10, 11, 12) and that the distance between each two adjacent magazine wheels (10, 11, 12) is the same.

9. Tool magazine according to one of the previous claims, **characterised in that** the magazine shaft (9) is received in at least one pivot bearing (24) and is supported on the magazine carriage (7).

10. Tool magazine according to one of the previous claims, **characterised in that** the tool holders (14) of the magazine wheels (10, 11, 12) receive the tools (15) together with a tool module (17), whereby in each tool module (17) is arranged a tool (15) together with a coolant distributor (16).

11. Tool magazine according to one of the previous claims, **characterised in that** the magazine shaft (9) is oriented essentially parallel to the guide rail (5).

12. Tool magazine according to one of the previous claims, **characterised in that** each tool holder (14) is designed to receive exactly one tool (15) in such a way that the tool (15) is aligned with its tool axis parallel to the magazine shaft (9).

13. Tool magazine according to one of the previous claims, **characterised in that** the transfer device (18) is arranged on the machine base (6) so as to be linearly displaceable along the transfer axis (19) essentially perpendicular to the guide rail (5).

14. Tool magazine according to one of the previous claims, **characterised in that** the magazine shaft (9) is oriented essentially parallel to the tool spindle.

15. Method for changing tools on a machine tool with tool spindle, whereby the machine tool (2) is equipped with a tool magazine (1) according to one of the previous claims and at least one free tool holder (14) is provided on each magazine wheel (10, 11, 12), **characterised by** the following process steps:
arranging the transfer device (18) in a spindle position in which the transfer device (18) is located in its position nearest the tool spindle (3),
picking up by the transfer device (18) of a first tool (25) arranged on the tool spindle (3),
rotating the magazine wheels (10, 11, 12) and/or displacing the magazine carriage (7) such that a free tool holder (14) of the magazine wheel (10),
which contains a second tool (15) to be arranged on the tool spindle (3), is located in a transfer position in which the first tool (25) arranged on the transfer device (18) can be set down on the free tool holder (14),
moving the transfer device (18) along the transfer axis (19) away from the tool spindle (3) into a tool change position in which the transfer device (18) is in its position nearest the magazine wheel (10) with the second tool (15), and the transfer device (18) with the first tool (25) on the one hand and the free tool holder (14) of the magazine wheel (10) which contains the second tool (15) on the other are immediately opposite one another in the transfer position,
setting down of the first tool (25) arranged on the transfer device (18) onto the free tool holder (14) of the magazine wheel (10) with the second tool (15),
rotating the magazine wheel (10) on which the second tool (15) is arranged until the tool holder with the second tool (15) is located in the transfer position,
setting down of the second tool (15) onto the transfer device (18),
moving the transfer device (18) along the transfer axis away from the magazine wheel (10) towards the tool spindle (3) until the transfer device (18) with the second tool (15) is located in the spindle position, setting down of the second tool (15) onto the tool spindle (3).

16. Method according to claim 15, **characterised in that** between the setting down of the first tool (25) and the picking up of the second tool (15) the transfer device (18) is moved along the transfer axis (19) away from the magazine shaft into an intermediate position, then the magazine shaft (9) is rotated until the second tool (15) is located in the transfer position and the transfer device (18) is subsequently moved back into the tool change position in order to pick up the second tool (15) from the tool holder.

17. Method according to claim 15 or 16, **characterised in that** the setting down of the first tool (25) from the tool spindle (3) onto the transfer device (18) and the movement of the transfer device (18) away from the tool spindle (3) in the direction of the magazine shaft (9) take place simultaneously with the movement of the magazine wheel (10) containing the second tool (15) and the arrangement of the free tool holder (14) of this magazine wheel (10) in the transfer position.

18. Method according to one of claims 15 to 17, **characterised in that** after the second tool (15) has been set down on the tool spindle (3) the transfer device (18) is moved along the transfer axis (19) and is arranged in an idle position which is removed from the tool spindle (3).

## Revendications

1. Magasin à outils pour la réception de plusieurs outils prévus pour être disposés sur une broche d'outil d'une machine-outil,
avec un rail de guidage (5) pouvant être placé de façon fixe sur une base de machine (6),
avec un entraînement de rotation (8), qui transfère un couple à un arbre de magasin rotatif (9) et fait tourner cet arbre de magasin (9) autour d'un axe de rotation de l'arbre (13),
avec aux moins deux roues de magasin (10, 11, 12) montées de façon solidaire sur l'arbre de magasin (9),
avec au moins deux supports d'outil (14) sur chacune des roues de magasin (10, 11, 12), chaque support d'outil (14) pouvant recevoir exactement un outil (15),
avec un dispositif de transfert (18) pouvant être placé sur la base de la machine (6), perpendiculairement au rail de guidage (5), être déplacé linéairement le long d'un axe de transfert (19) et étant formé de manière à réceptionner un outil (15) placé sur un support d'outil (14) des roues de magasin (10, 11, 12). Ce dispositif transporte cet outil le long de l'axe de transfert (19)
depuis le support d'outil (14) vers la broche d'outil (3),
le dépose sur cette broche d'outil (3) et est en plus formé de façon à réceptionner un outil (25) placé sur la broche d'outil (3) pour le transporter le long de l'axe de transfert (19) depuis la broche d'outil (3) jusqu'à un support d'outil libre
(14) d'une roue de magasin (10, 11, 12) et le déposer sur le support d'outil (14) libre,
**caractérisé en ce que**
un chariot de magasin (7) est monté de façon déplaçable sur le rail de guidage (5),
l'entraînement de rotation (8) est placé sur le chariot de magasin (7), l'arbre de magasin (9) est monté sur le chariot de magasin (7) de manière
à pouvoir tourner,
le magasin à outils est équipé d'un entraînement linéaire déplaçant le chariot de magasin (7) le long du rail de guidage (5).

2. Magasin à outils selon la revendication 1, **caractérisé en ce que**
le dispositif de transfert (18) présente au moins deux positions de fin de course :
- une position de broche dans laquelle le dispositif de transfert (18) se trouve
le plus près de la broche d'outil (3)
pour réceptionner un outil (25) placé sur la broche d'outil (3) ou déposer un outil (15) sur la broche d'outil (3) et
- une position de changement d'outil dans laquelle le dispositif de transfert (18) est le plus proche de l'arbre de magasin pour réceptionner un outil (15) placé sur la roue de magasin (10) tournée vers lui ou déposer un outil (25) sur le support d'outil (14) libre de la roue de magasin (10), tourné vers lui,
le dispositif de transfert (18) est linéairement déplaçable le long de l'axe de transfert (19) entre la position de la broche et la position de changement d'outil.

3. Magasin à outils selon la revendication 2, **caractérisé en ce que** le dispositif de transfert (18) présente comme troisième position de fin de course une position intermédiaire
qui se situe entre la position de la broche et la position de changement d'outil et dans laquelle les roues de magasin (10, 11, 12) tournent sans interaction avec le dispositif de transfert (18).

4. Magasin à outils selon l'une des revendications précédentes, **caractérisé en ce que** les roues de magasin (10, 11, 12) présentent une position de transfert pour les supports d'outil dans laquelle
le support d'outil (14) se trouvant dans la position de transfert est tout près de la position de changement d'outil du dispositif de transfert (18) de telle façon qu'un outil (15) placé sur ce support d'outil (14) puisse être déposé sur le dispositif de transfert (18) dans la position de changement d'outil, ou qu'un outil placé sur le dispositif de transfert puisse être déposé sur ce support, d'outil si celui-ci est libre, et que les roues de magasin (10, 11, 12) soient déplaçables le long du rail de guidage (5) et puissent tourner avec l'arbre de magasin (9) autour de l'axe de rotation (13) de telle façon que chaque support d'outil (14) des roues de magasin (10, 11, 12) soit déplaçable dans la position de transfert.

5. Magasin à outils selon l'une des revendications précédentes, **caractérisé en ce qu'**il présente un nombre 'n' de roues de magasin (10, 11, 12) et un nombre 'm' de supports d'outil (14) sur toutes les 'n' roues, et **en ce que** le magasin d'outil (1) réceptionne au total un nombre d'outils (15, 25) égal à m - n + 1.

6. Magasin à outils selon l'une des revendications précédentes, **caractérisé en ce que** sur chacune des roues de magasin (10, 11, 12), un support d'outil (14) est libre d'un outil, si un outil est placé
sur le dispositif de transfert ou sur la broche d'outil.

7. Magasin à outils selon l'une des revendications précédentes, **caractérisé en ce que** les roues de magasin (10, 11, 12) sont disposées parallèlement entre elles sur l'arbre de magasin (9).

8. Magasin à outils selon l'une des revendications précédentes, **caractérisé en ce qu'**il comprend au moins trois roues de magasin (10, 11, 12) et **en ce que** la distance entre respectivement deux roues de magasin (10, 11, 12) voisines est la même.

9. Magasin à outils selon l'une des revendications précédentes, **caractérisé en ce que** l'arbre de magasin (9) est logé dans au moins un palier rotatif (24) et est soutenu au niveau du chariot de magasin (7).

10. Magasin à outils selon l'une des revendications précédentes, **caractérisé en ce que** les supports d'outil (14) des roues de magasin (10, 11, 12) réceptionnent les outils (15) ensemble avec un module d'outil (17), un outil (15) étant respectivement placé dans un module d'outil (17) avec un distributeur de liquide de refroidissement (16).

11. Magasin à outils selon l'une des revendications précédentes, **caractérisé en ce que** l'arbre de magasin (9) est essentiellement orienté en parallèle au rail de guidage (5).

12. Magasin à outils selon l'une des revendications précédentes, **caractérisé en ce que** chaque support d'outil (14) est formé de manière à réceptionner exactement un outil (15), et cela de façon que l'axe d'outil de l'outil (15) soit orienté en parallèle à l'arbre de magasin (9).

13. Magasin à outils selon l'une des revendications précédentes, **caractérisé en ce que** le dispositif de transfert (18) est monté sur la base de machine (6) de manière essentiellement perpendiculaire au rail de guidage (5) et peut être déplacé linéairement le long de l'axe de transfert (19).

14. Magasin à outils selon l'une des revendications précédentes, **caractérisé en ce que** l'arbre de magasin (9) est essentiellement orienté en parallèle à la broche d'outil.

15. Procédé de changement d'outils sur une machine-outil dotée d'une broche d'outil, la machine-outil (2) étant équipée d'un magasin à outils (1) selon l'une des revendications précédentes et chaque roue de magasin (10, 11, 12) comprenant au moins un support d'outil libre (14), **caractérisé par** les étapes suivantes :
Positionnement du dispositif de transfert (18) dans une position de broche dans laquelle le dispositif (18) est le plus près de la broche d'outil (3), Réception d'un premier outil (25) placé sur la broche d'outil (3), par le dispositif de transfert (18),
Rotation des roues de magasin (10, 11, 12) et/ou déplacement du chariot de magasin (7) de telle façon qu'un support d'outil (14) libre de la roue de magasin (10) contenant un deuxième outil (15) à placer sur la broche (3), se trouve dans une position de transfert dans laquelle le premier outil (25) placé sur le dispositif de transfert (18), peut être déposé dans le support d'outil (14) libre, Déplacement du dispositif de transfert (18) le long de l'axe de transfert (19) depuis la broche d'outil (3) vers une position de changement d'outil dans laquelle
le dispositif de transfert (18) se trouve le plus près de la roue de magasin (10) avec
le deuxième outil (15), le dispositif de transfert (18) avec le premier outil (25), d'une part, et le support d'outil (14) libre de la roue de magasin (10) contenant le deuxième outil (15) dans la position de transfert, d'autre part, se font directement face,
Dépose du premier outil (25) placé sur le dispositif de transfert (18) sur le support d'outil (14) libre de la roue de magasin (10) avec le deuxième outil (15).
Rotation de la roue de magasin (10) sur laquelle est placé le deuxième outil (15)
jusqu'à ce que le support d'outil avec le deuxième outil (15) se trouve dans la position de transfert,
Dépose du deuxième outil (15) sur le dispositif de transfert (18),
Déplacement du dispositif de transfert (18) le long de l'axe de transfert, depuis la roue de magasin (10) vers la broche d'outil (3), jusqu'à ce que le dispositif de transfert (18) avec le deuxième outil (15) se trouve à la position de la broche,
Dépose du deuxième outil (15) sur la broche d'outil (3).

16. Procédé selon la revendication 15, **caractérisé en ce que** le dispositif de transfert (18) est déplacé entre la dépose du premier outil (25) et la réception du deuxième outil (15) le long de
l'axe de transfert (19) depuis l'arbre de magasin dans une position intermédiaire, l'arbre de magasin (9) tournant ensuite jusqu'à ce que le deuxième outil (15) se trouve dans la position de transfert, puis le dispositif de transfert (18) se déplaçant de nouveau vers la position de changement d'outil pour réceptionner le deuxième outil (15) du support d'outil.

17. Procédé selon la revendication 15 ou 16, **caractérisé en ce que** la dépose du premier outil (25) de la broche d'outil (3) sur le dispositif de transfert (18), et le déplacement du dispositif de transfert (18) depuis la broche d'outil (3) vers l'arbre de magasin (9)
s'effectuent en même temps que le mouvement de la roue de magasin (10) contenant le deuxième outil (15) et le positionnement du support d'outil (14) libre de cette roue de magasin (10) en position de transfert.

18. Procédé selon l'une des revendications 15 à 17, **caractérisé en ce que** le dispositif de transfert (18) se déplace, après la dépose du deuxième outil (15) sur la broche d'outil (3), le long de l'axe de transfert (19) et se place dans une position de repos éloignée de la broche d'outil (3).
